# EUROPEAN PATENT APPLICATION

(11) **EP 4 764 962 A1**
(43) Date of publication of application: **24.06.2026**
(21) Application number: 23958951.8
(22) Date of filing: 15.11.2023
(51) Int. Cl.: G06N 3/096, G06N 3/0895

(54) **ARTIFICIAL INTELLIGENCE SERVER AND OPERATION METHOD THEREOF**

(71) Applicant: LG Electronics Inc., Yeongdeungpo-gu Seoul 07336 (KR)
(72) Inventor: KIM, Kokeun, Seoul 06772 (KR); KIM, Byounghoon, Seoul 06772 (KR); KIM, Seonghyok, Seoul 06772 (KR); HAN, Eunjung, Seoul 06772 (KR)
(74) Representative: Schott, Jakob Valentin
(86) International application number: PCT/KR2023/018329
(87) International publication number: WO 2025/105524

(57) **Abstract**

An artificial intelligence server according to an embodiment of the present disclosure includes a memory storing a multi-modal model that infers a situation by using a plurality of modalities having different types, a communication circuit communicating with a plurality of edge devices or a cloud server, and a processor that receives parameter information for a fine-tuned layer of the multi-modal model from the cloud server, receives a plurality of encrypted modalities from the plurality of edge devices, and updates the parameter information of the fine-tuned layer of the multi-modal model by using the received plurality of encrypted modalities.

## Description

### [Technical Field]

The present invention relates to an artificial intelligence server, and more particularly, to an artificial intelligence server that infers a situation by using a multi-modal model.

### [Background Art]

A multi-modal model refers to a model that processes various types of input data and generates various types of outputs.

A multi-modal model can mainly handle various types of data such as text, image, and audio simultaneously. For example, it can generate a description by simultaneously understanding an image and a caption, or can improve natural language understanding and speech recognition by processing text and speech together.

Conventionally, there was a technology of encrypting input information at an edge device for privacy protection and transmitting it to an artificial intelligence server for processing.

However, conventionally, despite input information being different for each user, only non-personalized global artificial intelligence models were provided.

In addition, for each modality (each data type), there was no parameter setting of an encoder for encrypting input information.

### [Disclosure]

### [Technical Problem]

The present disclosure has an object of transmitting a fine-tuned layer of a multi-modal model learned by a cloud server to a home server, and updating the fine-tuned layer through encrypted input information collected at the home server, to provide a personalized multi-modal model.

The present disclosure has an object of encrypting modality data by using an encryption module (encoder) according to the type of modality, and learning a multi-modal model.

### [Technical Solution]

An artificial intelligence server according to an embodiment of the present disclosure may include a memory storing a multi-modal model that infers a situation by using a plurality of modalities having different types, a communication circuit communicating with a plurality of edge devices or a cloud server, and a processor that receives parameter information for a fine-tuned layer of the multi-modal model from the cloud server, receives a plurality of encrypted modalities from the plurality of edge devices, and updates the parameter information of the fine-tuned layer of the multi-modal model by using the received plurality of encrypted modalities.

A method of operating an artificial intelligence server according to an embodiment of the present disclosure may include receiving parameter information for a fine-tuned layer of a multi-modal model that infers a situation by using a plurality of modalities having different types from a cloud server, receiving a plurality of encrypted modalities from the plurality of edge devices, and updating the parameter information of the fine-tuned layer of the multi-modal model by using the received plurality of encrypted modalities.

### [Advantageous Effects]

According to an embodiment of the present disclosure, situation inference based on a user-customized basis and actions for situation inference can be effectively performed according to a personalized multi-modal model.

According to an embodiment of the present disclosure, an accurate situation can be inferred by using various types of data, and an action suitable for the inferred situation can be taken.

### [Description of Drawings]

FIG. 1 illustrates an AI device according to an embodiment of the present disclosure.
FIG. 2 illustrates an AI server according to an embodiment of the present disclosure.
FIG. 3 is a diagram for explaining a configuration of an artificial intelligence system according to an embodiment of the present disclosure.
FIG. 4 is a ladder diagram for explaining a method of operating an artificial intelligence system according to an embodiment of the present disclosure.
FIG. 5A is a diagram explaining a process in which a cloud server collects modalities according to an embodiment of the present disclosure, and FIG. 5B is a diagram explaining a process in which a cloud server learns a multi-modal model by using the collected modalities.
FIG. 6 is a diagram explaining a fine-tuning process of a multi-modal model according to an embodiment of the present disclosure.
FIG. 7 is a ladder diagram for explaining a method of operating an artificial intelligence system according to an embodiment of the present disclosure.
FIGS. 8A to 8C are diagrams explaining a process of inferring a situation from a plurality of modalities by using a pre-learned multi-modal model according to embodiments of the present disclosure.
FIG. 9 is a diagram explaining an example in which each of a plurality of home servers includes a personalized multi-modal model according to an embodiment of the present disclosure.

### [Mode for Invention]

Artificial intelligence refers to a field that studies artificial intelligence or methodologies that can create it, and machine learning (Machine Learning) refers to a field that defines various problems dealt with in the field of artificial intelligence and studies methodologies for solving them. Machine learning is also defined as an algorithm that improves performance on a certain task through continuous experience on that task.

An artificial neural network (ANN: Artificial Neural Network) is a model used in machine learning, and may refer to overall models having problem-solving capability, composed of artificial neurons (nodes) that form a network through synaptic connections. An artificial neural network can be defined by a connection pattern between neurons of different layers, a learning process that updates model parameters, and an activation function (Activation Function) that generates output values.

An artificial neural network may include an input layer (Input Layer), an output layer (Output Layer), and optionally one or more hidden layers (Hidden Layer). Each layer includes one or more neurons, and the artificial neural network may include synapses that connect neurons to neurons. In the artificial neural network, each neuron may output a function value of an activation function for input signals, weights, and biases inputted through synapses.

Model parameters refer to parameters determined through learning, and include weights of synaptic connections and biases of neurons. And hyperparameters refer to parameters that must be set before learning in a machine learning algorithm, and include learning rate (Learning Rate), number of iterations, mini-batch size, initialization function, and the like.

The purpose of learning of an artificial neural network can be viewed as determining model parameters that minimize a loss function. A loss function may be used as an index for determining optimal model parameters during the learning process of an artificial neural network.

Machine learning can be classified into supervised learning (Supervised Learning), unsupervised learning (Unsupervised Learning), and reinforcement learning (Reinforcement Learning) depending on the learning method.

Supervised learning refers to a method of training an artificial neural network in a state where labels are given for training data, and a label may refer to a correct answer (or result value) that the artificial neural network must infer when training data is input to the artificial neural network. Unsupervised learning may refer to a method of training an artificial neural network in a state where labels are not given for training data. Reinforcement learning may refer to a learning method of training an agent defined in a certain environment to select an action or sequence of actions that maximizes cumulative reward in each state.

Machine learning implemented as a deep neural network (DNN: Deep Neural Network) including a plurality of hidden layers among artificial neural networks is sometimes referred to as deep learning (Deep Learning), and deep learning is part of machine learning. Hereinafter, machine learning is used in a sense that includes deep learning.

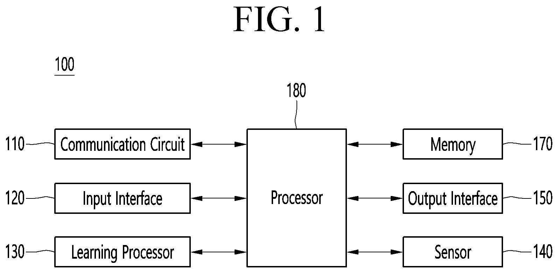

FIG. 1 illustrates an artificial intelligence (Artificial Intelligence, AI) device according to an embodiment of the present disclosure.

The AI device 100 may be implemented as a stationary device or a movable device, such as a TV, a projector, a mobile phone, a smartphone, a desktop computer, a notebook, a digital broadcasting terminal, a PDA (personal digital assistants), a PMP (portable multimedia player), a navigation device, a tablet PC, a wearable device, a set-top box (STB), a DMB receiver, a radio, a washing machine, a refrigerator, a desktop computer, a digital signage, a robot, a vehicle, and the like.

Referring to FIG. 1, the terminal 100 may include a communication circuit 110, an input interface 120, a learning processor 130, a sensor 140, an output interface 150, a memory 170, and a processor 180.

The communication circuit 110 may transmit and receive data to and from external devices such as other AI devices 100a to 100e and the AI server 200 by using wired/wireless communication technology.

The communication circuit 110 may transmit and receive sensor information, a user input, a learning model, a control signal, and the like to and from external devices.

Communication technologies used by the communication circuit 110 include GSM (Global System for Mobile communication), CDMA (Code Division Multi Access), LTE (Long Term Evolution), 5G, WLAN (Wireless LAN), Wi-Fi (Wireless-Fidelity), Bluetooth^{™}, RFID (Radio Frequency Identification), IrDA (Infrared Data Association), ZigBee, NFC (Near Field Communication), and the like.

The input interface 120 may acquire various kinds of data.

The input interface 120 may include a camera for inputting a video signal, a microphone for receiving an audio signal, a user input interface for receiving information from a user, and the like.

The camera or the microphone may be treated as a sensor, and a signal acquired from the camera or the microphone may also be referred to as sensing data or sensor information.

The input interface 120 may acquire learning data for model learning and input data to be used when an output is acquired by using a learning model. The input interface 120 may also acquire raw input data, and in this case, the processor 180 or the learning processor 130 may extract an input feature as preprocessing with respect to the input data.

The learning processor 130 may train a model composed of an artificial neural network by using learning data. Here, the trained artificial neural network may be referred to as a learning model. The learning model may be used to infer a result value for new input data rather than learning data, and the inferred value may be used as a basis for determination to perform a certain operation.

The learning processor 130 may perform AI processing together with the learning processor 240 of the AI server 200.

The learning processor 130 may include a memory integrated in or implemented in the AI device 100. Alternatively, the learning processor 130 may be implemented by using the memory 170, an external memory directly coupled to the AI device 100, or a memory held in an external device.

The sensor 140 may acquire at least one of internal information of the AI device 100, ambient environment information of the AI device 100, and user information by using a plurality of sensors.

The sensor 140 may include one or more of a proximity sensor, an illuminance sensor, an acceleration sensor, a magnetic sensor, a gyro sensor, an inertial sensor, an RGB sensor, an IR sensor, a fingerprint recognition sensor, an ultrasonic sensor, an optical sensor, a microphone, a lidar, and a radar.

The output interface 150 may generate an output related to a visual sense, an auditory sense, or a tactile sense.

The output interface 150 may include a display unit that outputs visual information, a speaker that outputs auditory information, a haptic module that outputs tactile information, and the like.

The memory 170 may store data that supports various functions of the AI device 100. The memory 170 may store input data acquired by the input interface 120, learning data, a learning model, a learning history, and the like.

The processor 180 may determine at least one executable operation of the AI device 100 based on information determined or generated by using a data analysis algorithm or a machine learning algorithm.

The processor 180 may control the components of the AI device 100 to perform the determined operation.

To this end, the processor 180 may request, search, receive, or utilize data of the learning processor 130 or the memory 170, and may control the components of the AI device 100 to execute a predicted operation or an operation determined to be desirable among the at least one executable operation.

When the connection of an external device is required to perform the determined operation, the processor 180 may generate a control signal for controlling the external device and may transmit the generated control signal to the external device.

The processor 180 may acquire intention information for a user input and may determine the user's requirements based on the acquired intention information.

The processor 180 may acquire intention information corresponding to the user input by using at least one or more of an STT (Speech To Text) engine for converting a voice input into a text string or an NLP (Natural Language Processing) engine for acquiring intention information of a natural language.

At least one or more of the STT engine or the NLP engine may be composed of an artificial neural network, at least a part of which is learned according to a machine learning algorithm. And at least one or more of the STT engine or the NLP engine may be learned by the learning processor 130, may be learned by the learning processor 240 of the AI server 200, or may be learned by distributed processing thereof.

The processor 180 may collect history information including operation contents of the AI device 100 or a user's feedback on the operation and store the collected history information in the memory 170 or the learning processor 130, or transmit the collected history information to an external device such as the AI server 200. The collected history information may be used to update the learning model.

The processor 180 may control at least some of the components of the AI device 100 in order to drive an application program stored in the memory 170. Furthermore, the processor 180 may operate two or more of the components included in the AI device 100 in combination in order to drive the application program.

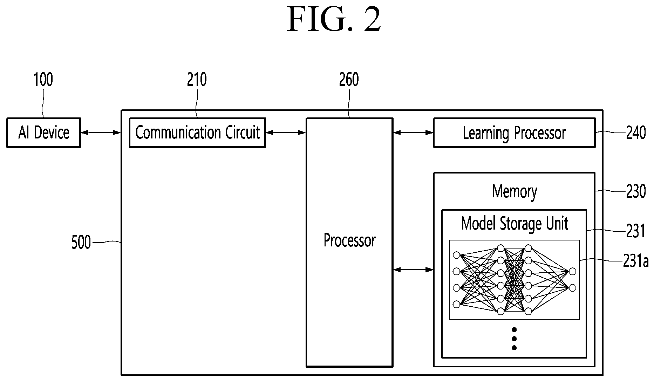

FIG. 2 illustrates an AI server 200 according to an embodiment of the present disclosure.

Referring to FIG. 2, the AI server 200 may refer to a device that trains an artificial neural network by using a machine learning algorithm or uses a trained artificial neural network. Here, the AI server 200 may be composed of a plurality of servers to perform distributed processing, or may be defined as a 5G network.

The AI server 200 may be included as a partial configuration of the AI device 100 and may perform at least some of the AI processing together.

The AI server 200 may include a communication circuit 210, a memory 230, a learning processor 240, and a processor 260.

The communication circuit 210 may transmit and receive data to and from an external device such as the AI device 100.

The memory 230 may include a model storage unit 231. The model storage unit 231 may store a model being trained or a trained model (or an artificial neural network 231a) through the learning processor 240.

The learning processor 240 may train the artificial neural network 231a by using learning data. The learning model may be used in a state of being mounted on the AI server 200 of the artificial neural network, or may also be used in a state of being mounted on an external device such as the AI device 100.

The learning model may be implemented in hardware, software, or a combination of hardware and software. When all or part of the learning model is implemented in software, one or more instructions constituting the learning model may be stored in the memory 230.

The processor 260 may infer a result value for new input data by using the learning model, and may generate a response or a control command based on the inferred result value.

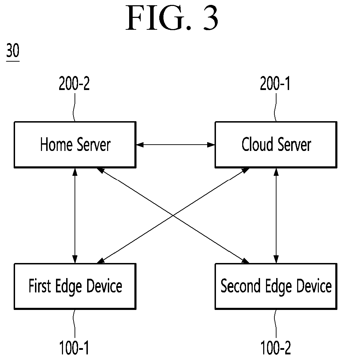

FIG. 3 is a diagram for explaining a configuration of an artificial intelligence system according to an embodiment of the present disclosure.

The artificial intelligence system 30 may include a cloud server 200-1, a home server 200-2, a first edge device 100-1, and a second edge device 100-2.

In FIG. 3, it is described that there are two edge devices, but this is merely an example, and more edge devices may exist.

Each of the cloud server 200-1 and the home server 200-2 may include the components of FIG. 2. That is, each of the cloud server 200-1 and the home server 200-2 may be an example of the AI server 200 of FIG. 2. Each of the cloud server 200-1 and the home server 200-2 may be referred to as an artificial intelligence server.

Each of the first edge device 100-1 and the second edge device 100-2 may include all of the components illustrated in FIG. 1. That is, each of the first edge device 100-1 and the second edge device 100-2 may be an example of the AI device 100 illustrated in FIG. 1.

As another example, each of the first edge device 100-1 and the second edge device 100-2 may be one component of the AI device 100.

Each of the first edge device 100-1 and the second edge device 100-2 may be an electronic device capable of collecting modality data such as a camera, a sensor, a home appliance, a TV, and a microphone.

The first edge device 100-1 and the second edge device 100-2 may be electronic devices used by the same user. The first edge device 100-1 and the second edge device 100-2 may be installed in a specific space, for example, inside a home.

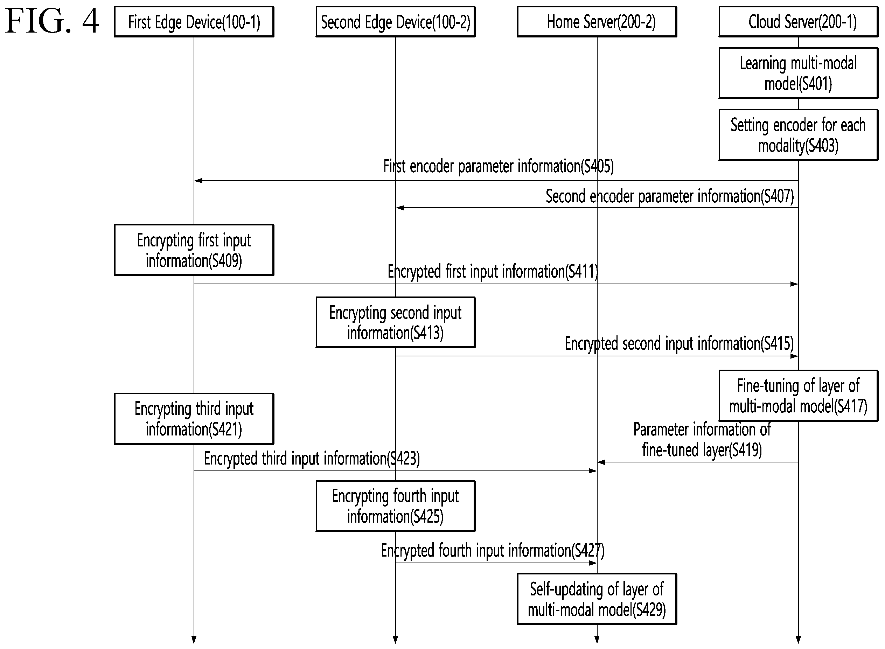

FIG. 4 is a ladder diagram for explaining a method of operating an artificial intelligence system according to an embodiment of the present disclosure.

Hereinafter, input information is information collected by an edge device and may be a modality.

Referring to FIG. 4, the cloud server 200-1 may learn a multi-modal model (S401), and the cloud server 200-1 may set an encoder differently for each modality (S403).

The cloud server 200-1 may include a plurality of encoders corresponding to each of a plurality of modalities. The plurality of encoders may be included in the processor 260 or may be provided separately from the processor 260.

Each of the plurality of encoders may be an encryption module that encrypts a modality received from the edge device 100-1.

The learning processor 240 or the processor 260 of the cloud server 200-1 may set parameters of an encoder differently for each modality.

The learning processor 240 or the processor 260 of the cloud server 200-1 may learn a multi-modal model.

The multi-modal model may be an artificial neural network-based model that infers a situation by taking a plurality of modalities as input.

The multi-modal model may be a model learned by using contrastive learning (Contrastive Learning).

Contrastive learning may be a method of learning to make distances between similar sample pairs close to each other and distances between dissimilar sample pairs far from each other in an embedding space.

The processor 260 of the cloud server 200-1 may learn the multi-modal model such that distances between feature vectors of modalities of the same type are close, and distances between feature vectors of modalities of different types are far from each other.

A modality may be referred to as multi-modal data as input data of the multi-modal model.

Multi-modal data may include one or more of image data, text data, sound data, sensor data, and log data (table data or knowledge data) of the edge device 100-1.

In one embodiment, the cloud server 200-1 may collect a plurality of modalities from a plurality of edge devices.

In another embodiment, the plurality of modalities may be data generated from a generative AI model of a generative artificial intelligence server rather than actual data. This is because, in the case of actual data, privacy issues may arise.

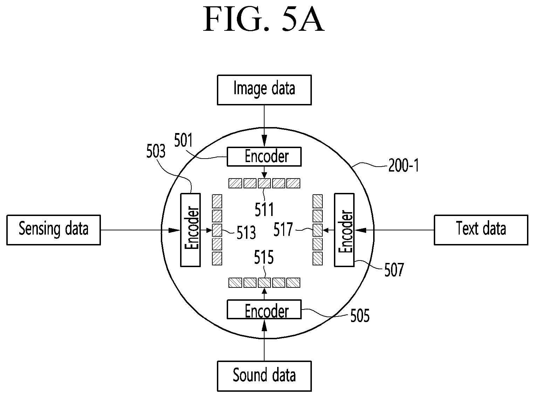

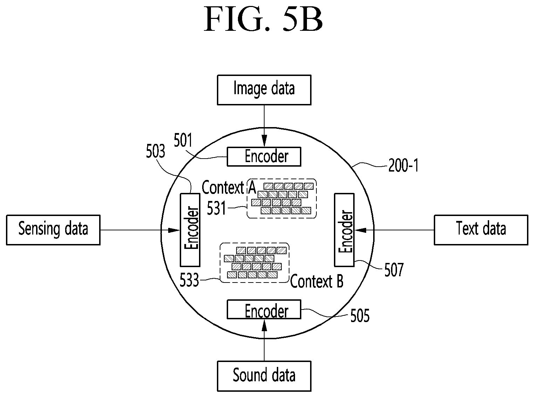

FIG. 5A is a diagram explaining a process in which a cloud server collects modalities according to an embodiment of the present disclosure, and FIG. 5B is a diagram explaining a process in which a cloud server learns a multi-modal model by using the collected modalities.

The cloud server 200-1 may collect image data, sensing data, sound data, and text data.

The cloud server 200-1 may receive a modality from each of a plurality of edge devices.

The plurality of encoders may include an image encoder 501 that encrypts image data, a sensor encoder 503 that encrypts sensing data, a sound encoder 505 that encrypts sound data, and a text encoder 507 that encrypts text data.

The learning processor 240 or the processor 260 of the cloud server 200-1 may train the image encoder 501 corresponding to image data through a convolutional neural network (CNN).

The learning processor 240 or the processor 260 of the cloud server 200-1 may train the sound encoder 505 corresponding to sound data through a recurrent neural network (RNN).

The learning processor 240 or the processor 260 of the cloud server 200-1 may train the text encoder 507 corresponding to text data through a BERT (Bidirectional Encoder Representations from Transformers) algorithm.

The image encoder 501 may output a first vector set 511 input to the multi-modal model by using image data.

The sensor encoder 503 may output a second vector set 513 input to the multi-modal model by using sensing data. The sensing data may be a millimeter wave signal related to detection of the presence of a person and the person's posture.

The sound encoder 505 may output a third vector set 515 input to the multi-modal model by using sound data.

The text encoder 507 may output a fourth vector set 517 input to the multi-modal model by using text data.

The first to fourth vector sets 511 to 517 may be used for the multi-modal model to infer a situation later. Each of the first to fourth feature vectors 511 to 517 may include 512 vectors, but this is merely an example.

The cloud server 200-1 may additionally collect log information of the edge device 100-1 or a home appliance. The log information of the home appliance may include information on the operation state and operation history of the home appliance.

Referring to FIG. 5B, the cloud server 200-1 may train the multi-modal model by using the first to fourth vector sets 511 to 517.

The cloud server 200-1 may train the multi-modal model through contrastive learning. The multi-modal model may output an inferred situation by using the first to fourth vector sets 511 to 517.

The multi-modal model may be trained so that the first to fourth vector sets 511 to 517 converge to a specific data point in an embedding space.

For example, the multi-modal model may infer a situation in which a user is cooking (Context A) or a situation in which a user is watching TV (Context B), with the first to fourth vector sets 511 to 517 as input.

Again, FIG. 4 is described.

The processor 260 of the cloud server 200-1 may transmit first encoder parameter information according to the setting to the first edge device 100-1 through the communication circuit 210 (S405), and may transmit second encoder parameter information to the second edge device 100-2 through the communication circuit 210 (S407).

The first encoder parameter information may include information on the parameters of the first encoder.

The second encoder parameter information may include information on the parameters of the second encoder.

The parameter information may include parameters that may be used to encrypt input information input to an encoder according to the type of modality.

The processor 260 of the cloud server 200-1 may transmit first encoder parameter information corresponding to the modality type that the first edge device 100-1 is capable of collecting to the first edge device 100-1.

The processor 260 of the cloud server 200-1 may transmit second encoder parameter information corresponding to the modality type that the second edge device 100-2 is capable of collecting to the second edge device 100-2.

The first edge device 100-1 may encrypt first input information based on the received first encoder parameter information (S409), and may transmit the encrypted first input information to the cloud server 200-1 (S411).

The first edge device 100-1 may collect one or more modalities. The collected modality may be data with privacy issues. That is, the modality may be data with privacy issues such as image data captured inside a home and sound data of a speaker having a conversation inside a home.

The first edge device 100-1 may include a first encoder corresponding to the type of modality that it is capable of collecting.

For example, when the first edge device 100-1 is capable of collecting image data, the first edge device 100-1 may include an image encoder capable of encrypting image data.

The first edge device 100-1 may update the parameters of the first encoder based on the first encoder parameter information.

The first edge device 100-1 may encrypt the first input information by using the updated parameters of the first encoder.

The second edge device 100-2 may encrypt second input information based on the received second encoder parameter information (S413), and may transmit the encrypted second input information to the cloud server 200-1 (S415).

The second edge device 100-2 may collect one or more modalities. The collected modality may be data with privacy issues. That is, the modality may be data with privacy issues such as image data captured inside a home and sound data of a speaker having a conversation inside a home.

The second edge device 100-2 may include a first encoder corresponding to the type of modality that it is capable of collecting.

For example, when the second edge device 100-2 is capable of collecting sensing data, the second edge device 100-2 may include a sensing encoder capable of encrypting sensing data.

The second edge device 100-2 may update the parameters of the second encoder based on the second encoder parameter information.

The second edge device 100-2 may encrypt the second input information by using the updated parameters of the second encoder, and may transmit the encrypted second input information to the cloud server 200-1.

The cloud server 200-1 may fine-tune a layer of the multi-modal model based on the encrypted first and second input information (S417).

The encrypted input information may be information in which one or more of the plurality of modalities is encrypted.

The multi-modal model may include a plurality of layers. The plurality of layers may include an input layer input to the multi-modal model, a hidden layer that extracts features of data input to the input layer, and an output layer that outputs an inferred situation by using the extracted features.

Each of the input layer, the hidden layer, and the output layer may be composed of one or more layers.

The learning processor 240 or the processor 260 of the cloud server 200-1 may fine-tune parameters of one or more layers among the plurality of layers constituting the multi-modal model based on the encrypted input information.

The parameter of a layer may be a weight.

Fine-tuning may be a process of partially adjusting parameters of a layer constituting a multi-modal model to suit a new purpose (or task) of a pre-trained multi-modal model.

Fine-tuning may be a process of improving the situation inference performance of the multi-modal model while adjusting various parameters such as the amount of data used for learning, learning rate, and epochs.

The cloud server 200-1 may generate a personalized multi-modal model through the first input information received from the first edge device 100-1 and the second input information received from the second edge device 100-2. The personalized multi-modal model may be a model in which parameters of some layers are adjusted based on the encrypted first and second input information.

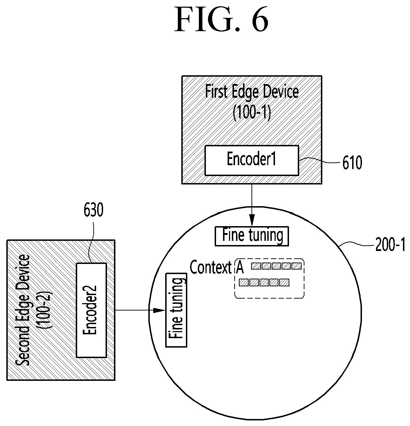

FIG. 6 is a diagram explaining a fine-tuning process of a multi-modal model according to an embodiment of the present disclosure.

Referring to FIG. 6, the first edge device 100-1 may be a camera that collects image data. The first edge device 100-1 may include an image encoder 610 that encrypts image data.

The first edge device 100-1 may collect first input information, and may generate encrypted first input information through the image encoder 610. The encrypted first input information may be a first vector set including 512 vectors. The first edge device 100-1 may transmit the encrypted first input information to the cloud server 200-1.

The second edge device 100-2 may be a sensor that collects sensing data. The second edge device 100-2 may include a sensor encoder 630 that encrypts sensing data.

The second edge device 100-2 may collect second input information, and may generate encrypted second input information through the sensor encoder 630. The encrypted second input information may be a second vector set including 512 vectors. The second edge device 100-2 may transmit the encrypted second input information to the cloud server 200-1.

The cloud server 200-1 may fine-tune some layers of the multi-modal model based on the first input information received from the first edge device 100-1 and the second input information received from the second edge device 100-2.

The cloud server 200-1 may fine-tune some layers of the multi-modal model so that the multi-modal model that receives the encrypted first and second input information infers a specific situation (Context A). The specific situation may be a situation where the user is cooking.

Again, FIG. 4 is described.

The cloud server 200-1 may transmit parameter information of the fine-tuned layer to the home server 200-2 through the communication circuit 210 (S419).

The processor 260 of the cloud server 200-1 may transmit information on the parameters updated according to fine-tuning of the layer of the multi-modal model to the home server 200-2 through the communication circuit 210.

The parameter information of the fine-tuned layer may include weights of parameters constituting the corresponding layer. The weights may have values between 0 and 1, and the number of weights may be 262144 (512 x 512).

The cloud server 200-1 may transmit parameter information for a layer on which different fine-tuning has been performed for each home server to each home server. That is, the cloud server 200-1 may perform fine-tuning of the multi-modal model through the plurality of modalities received from the edge devices 100-1 and 100-2 connected to the home server 200-2. Accordingly, a personalized multi-modal model may be provided to each home server.

In another embodiment, the processor 260 of the cloud server 200-1 may transmit the multi-modal model to the home server 200-2. The processor 260 of the cloud server 200-1 may transmit parameter information for a plurality of layers constituting the multi-modal model to the home server 200-2.

The home server 200-2 may store parameter information of the fine-tuned layer received from the cloud server 200-1 or parameter information for a plurality of layers constituting the multi-modal model in the memory 230.

The home server 200-2 may set parameters for the layer of the previously stored multi-modal model by using the parameter information of the fine-tuned layer received from the cloud server 200-1.

Thereafter, the first edge device 100-1 encrypts third input information (S421), and transmits the encrypted third input information to the home server 200-2 (S423).

The second edge device 100-2 encrypts fourth input information (S425), and transmits the encrypted fourth input information to the home server 200-2 (S427).

The home server 200-2 may autonomously update a layer of the multi-modal model based on the encrypted third and fourth input information (S429).

The learning processor 240 or the processor 260 of the home server 200-2 may fine-tune one or more layers among the plurality of layers constituting the multi-modal model based on the encrypted third and fourth input information.

The learning processor 240 or the processor 260 of the home server 200-2 may obtain a third vector set by using a first encoder corresponding to the third input information, and may obtain a fourth vector set by using a second encoder corresponding to the fourth input information.

The learning processor 240 or the processor 260 of the home server 200-2 may adjust weights of parameters of one or more layers among the plurality of layers constituting the multi-modal model by using the third and fourth vector sets.

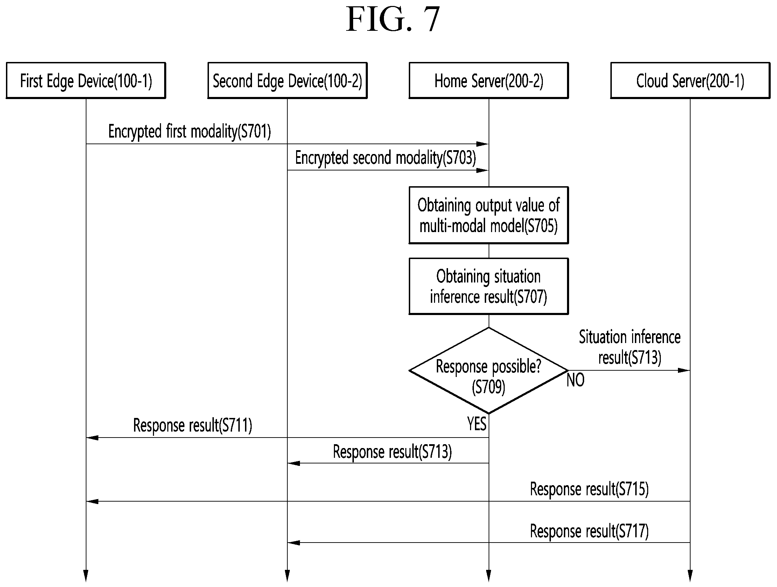

FIG. 7 is a ladder diagram for explaining a method of operating an artificial intelligence system according to an embodiment of the present disclosure.

FIG. 4 is a diagram explaining a learning and fine-tuning process of a multi-modal model, and FIG. 7 is a diagram explaining a process of outputting situation inference by using a fine-tuned multi-modal model.

The embodiment of FIG. 7 may occur after the embodiment of FIG. 4.

Referring to FIG. 7, the first edge device 100-1 may transmit an encrypted first modality to the home server 200-2 (S701), and the second edge device 100-2 may transmit an encrypted second modality to the home server 200-2 (S703).

The first modality may be data collected by the first edge device 100-1, and the second modality may be data collected by the second edge device 100-2. Each of the first and second modalities may be one of image data, sensing data, sound data, or text data.

The processor 260 of the home server 200-2 may obtain an output value of the multi-modal model by using the encrypted first modality and the encrypted second modality (S705).

The multi-modal model may be stored in the memory 230 of the home server 200-2.

The processor 260 of the home server 200-2 may extract a first feature vector set from the encrypted first modality, and may extract a second feature vector set from the encrypted second modality.

Each of the first feature vector set and the second feature vector set may include 512 vectors.

The processor 260 of the home server 200-2 may input the first feature vector set and the second feature vector set to the multi-modal model learned through contrastive learning, to obtain an output value of the multi-modal model.

The output value of the multi-modal model may be expressed as a set of 512 output vectors.

The processor 260 of the home server 200-2 may obtain a situation inference result matched to the obtained output value of the multi-modal model (S707).

A specific situation may be matched to the output value of the multi-modal model.

Each of a plurality of output values may be matched with each of a plurality of situation inference results. The situation inference result may be one of a user's emotional state, an in-home occupancy state, an intruder state inside the home, and an emergency state inside a vehicle.

The processor 260 of the home server 200-2 may determine whether a response to the obtained situation inference result is possible (S709).

The processor 260 of the home server 200-2 may determine that a response is possible when an action for the situation inference result is possible, and may determine that a response is impossible when an action for the situation inference result is impossible.

For example, when the situation inference result is an absence situation at home, control for minimizing power of home appliances in the home may be required. The processor 260 of the home server 200-2 may determine that a response to the situation inference result is impossible when the home server 200-2 does not have authority for controlling the home appliances, and may determine that a response is possible when the home server 200-2 has authority for controlling the home appliances.

When the processor 260 of the home server 200-2 determines that a response to the obtained situation inference result is possible, the processor 260 may transmit a response result for the situation inference result to the first edge device 100-1 or the second edge device 100-2 through the communication circuit 210 (S711, 713).

When the situation inference result is an absence situation at home, the response result may be a control command for minimizing power of home appliances in the home. The control command may be a command for turning off the power of the home appliances or controlling them to a standby state.

The processor 260 of the home server 200-2 may transmit the response result for the situation inference result to a specific home appliance rather than the first and second edge devices 100-1 and 100-2.

When the processor 260 of the home server 200-2 determines that a response to the obtained situation inference result is impossible, the processor 260 may transmit the situation inference result to the cloud server 200-1 through the communication circuit 210 (S713).

The processor 260 of the home server 200-2 may transmit the situation inference result and the output value of the multi-modal model to the cloud server 200-1 through the communication circuit 210.

The processor 260 of the home server 200-2 may also transmit the situation inference result and the encrypted first and second modalities to the cloud server 200-1 through the communication circuit 210.

The processor 260 of the cloud server 200-1 may transmit a response result for the situation inference result to the first edge device 100-1 or the second edge device 100-2 through the communication circuit 210 (S715, 717).

The processor 260 of the cloud server 200-1 may obtain a response result for the situation inference result.

The processor 260 of the cloud server 200-1 may also transmit the obtained response result to the home server 200-2. In this case, the home server 200-2 may transmit the response result received from the cloud server 200-1 to the first edge device 100-1, the second edge device 100-2, or a specific home appliance.

Meanwhile, according to another embodiment of the present disclosure, a first situation inference result of the multi-modal model of the home server 200-2 and a second situation inference result of the multi-modal model of the cloud server 200-1 may be different from each other.

The cloud server 200-1 may receive the encrypted first and second modalities from the home server 200-2 and the first situation inference result obtained by the home server 200-2.

The cloud server 200-1 may obtain a second situation inference result from the encrypted first and second modalities by using the multi-modal model that it stores.

The cloud server 200-1 may transmit a notification indicating that inference results are different to the home server 200-2 or the first and second edge devices 100-1 and 100-2 when the first situation inference result and the second situation inference result are different.

For example, the home server 200-2 may recognize the current situation as a normal situation, and the cloud server 200-1 may recognize the current situation as an emergency or urgent situation. The cloud server 200-1 may transmit a notification indicating that it is an emergency or urgent situation to the home server 200-2 or the first and second edge devices 100-1 and 100-2. Accordingly, even if a situation determined through the multi-modal model included in the home server 200-2 is wrong, a notification about an emergency/urgent situation can be effectively made.

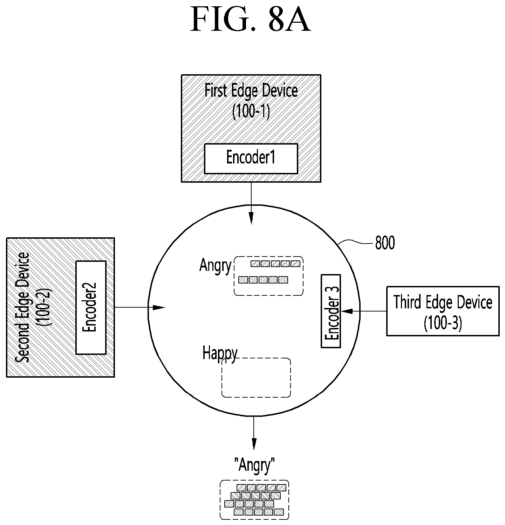

FIGS. 8A to 8C are diagrams explaining a process of inferring a situation from a plurality of modalities by using a pre-learned multi-modal model according to embodiments of the present disclosure.

In FIGS. 8A to 8C, the multi-modal model 800 may be a global model stored in the cloud server 200-1 or a personalized model stored in the home server 200-2.

First, FIG. 8A is described.

The first, second, and third edge devices 100-1, 100-2, and 100-3 may be provided in one device. For example, a home robot may include the first, second, and third edge devices 100-1, 100-2, and 100-3.

The multi-modal model 800 may receive encrypted image data from the first edge device 100-1, encrypted sound data from the second edge device 100-2, and text data from the third edge device 100-3.

The first edge device 100-1 may acquire image data including the user's facial expression, and may encrypt the image data through an image encoder.

The second edge device 100-2 may acquire sound data representing a voice uttered by the user, and may encrypt the sound data through a sound encoder.

The third edge device 100-3 may acquire text data representing the content of a conversation uttered by the user. Text data may be data that does not require privacy, and the third edge device 100-3 may not include an encoder for encrypting text data.

Text data may be converted into a vector set through a text encoder included in the cloud server 200-1 or the home server 200-2.

The multi-modal model 800 may output a situation inference result from a first vector set that is encrypted image data, a second vector set that is encrypted audio data, and a third vector set corresponding to text data.

For example, the situation inference result may represent the user's emotional state. The emotional state may include an angry state and a happy state.

The multi-modal model 800 may arrange the first vector set that is encrypted image data, the second vector set that is encrypted audio data, and the third vector set in an embedding space including a plurality of data points.

Each of the plurality of data points may correspond to a specific emotional state.

The multi-modal model 800 may obtain an emotional state corresponding to the data point closest to the first, second, and third vector sets as a situation inference result.

As illustrated in FIG. 8A, the multi-modal model 800 may obtain an angry state as a situation inference result.

The home server 200-2 or the cloud server 200-1 may transmit, in response to the angry state, a control command to the home robot requiring a conversation to soothe the user or an empathic conversation. The home robot may output a voice soothing the user or an empathic voice according to the control command.

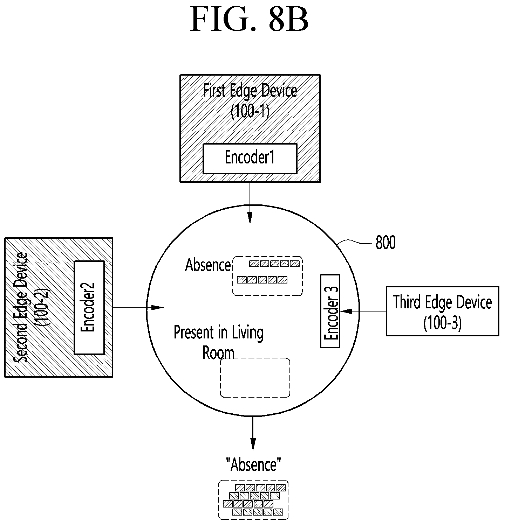

Next, FIG. 8B is described.

The multi-modal model 800 may receive encrypted sound data from the first edge device 100-1, encrypted sensing data from the second edge device 100-2, and log data from the third edge device 100-3.

The first edge device 100-1 may acquire sound data generated inside the home, and may encrypt the sound data through a sound encoder.

The second edge device 100-2 may acquire sensing data representing millimeter waves, and may encrypt the sensing data through a sensor encoder.

The third edge device 100-3 is a home appliance and may collect log data of the home appliance. The log data may include information on the operation time, operation state, and power state of the home appliance. The log data may be data that does not require privacy.

The log data may be converted into a vector set through an encoder included in the cloud server 200-1 or the home server 200-2.

The multi-modal model 800 may output a situation inference result from a first vector set that is encrypted sound data, a second vector set that is encrypted sensing data, and a third vector set corresponding to log data.

For example, the situation inference result may represent an in-home occupancy state, absence state, or intruder state.

The multi-modal model 800 may arrange the first vector set that is encrypted sound data, the second vector set that is encrypted sensing data, and the third vector set in an embedding space including a plurality of data points.

Each of the plurality of data points may correspond to an occupancy state, absence state, or intruder state.

The multi-modal model 800 may obtain a state corresponding to the data point closest to the first, second, and third vector sets as a situation inference result.

As illustrated in FIG. 8B, the multi-modal model 800 may obtain an absence state as a situation inference result.

The home server 200-2 or the cloud server 200-1 may transmit, in response to the absence state, a control command for minimizing power of home appliances in the home to the home appliances.

If the multi-modal model 800 obtains an intruder state as a situation inference result, the home server 200-2 or the cloud server 200-1 may transmit a security notification to the user's terminal.

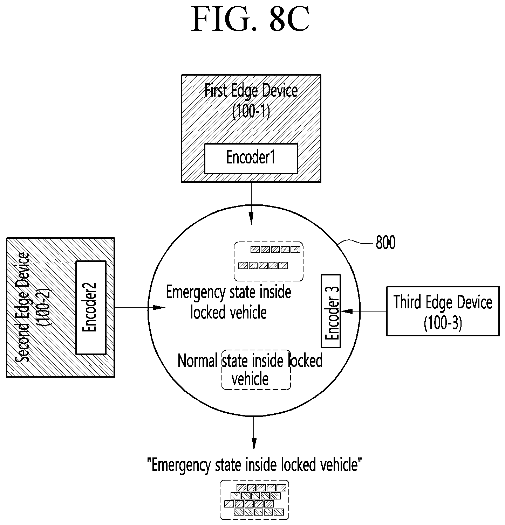

Next, FIG. 8C is described.

The first, second, and third edge devices 100-1, 100-2, and 100-3 may be provided in one device. For example, a vehicle may include the first, second, and third edge devices 100-1, 100-2, and 100-3.

The multi-modal model 800 may receive encrypted image data from the first edge device 100-1, encrypted audio data from the second edge device 100-2, and log data from the third edge device 100-3.

The first edge device 100-1 may acquire image data capturing the interior of the vehicle, and may encrypt the image data through an image encoder.

The second edge device 100-2 may acquire sound data inside the vehicle, and may encrypt the sound data through a sound encoder.

The third edge device 100-3 may collect log data as the processor of the vehicle. The log data may include information on the door open/close state of the vehicle, the speed of the vehicle, whether the vehicle is stopped, and the operation state of the vehicle. The log data may be data that does not require privacy.

The log data may be converted into a vector set through an encoder included in the cloud server 200-1 or the home server 200-2.

The multi-modal model 800 may output a situation inference result from a first vector set that is encrypted image data, a second vector set that is encrypted sound data, and a third vector set corresponding to log data.

For example, the situation inference result may represent an emergency state inside a locked vehicle or a normal state inside a locked vehicle.

The multi-modal model 800 may arrange the first vector set that is encrypted image data, the second vector set that is encrypted sound data, and the third vector set in an embedding space including a plurality of data points.

Each of the plurality of data points may represent an emergency state inside a locked vehicle or a normal state inside a locked vehicle.

The multi-modal model 800 may obtain a state corresponding to the data point closest to the first, second, and third vector sets as a situation inference result.

As illustrated in FIG. 8C, the multi-modal model 800 may obtain an emergency state inside a locked vehicle as a situation inference result.

The home server 200-2 or the cloud server 200-1 may, in response to the emergency state inside the locked vehicle, transmit an emergency notification to the terminal of the vehicle owner or unlock the vehicle.

As such, according to an embodiment of the present disclosure, an accurate situation can be inferred by using various types of data, and an action suitable for the inferred situation can be taken.

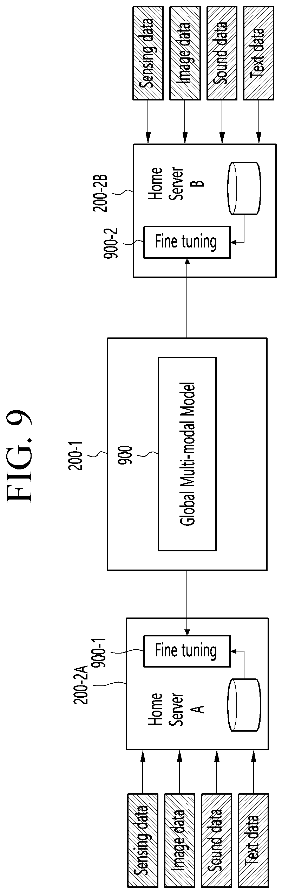

FIG. 9 is a diagram explaining an example in which each of a plurality of home servers includes a personalized multi-modal model according to an embodiment of the present disclosure.

Referring to FIG. 9, the cloud server 200-1 may store a global multi-modal model 900.

The global multi-modal model 900 may be transmitted to a plurality of home servers 200-2A and 200-2B.

The first home server 200-2A may perform fine-tuning on some layers of the global multi-modal model 900, and may include a fine-tuned first personalized model 900-1. This process may correspond to step S429 of FIG. 4.

The second home server 200-2B may perform fine-tuning on some layers of the global multi-modal model 900, and may include a fine-tuned second personalized model 900-2. This process may correspond to step S429 of FIG. 4.

That is, each home server may perform fine-tuning on the global multi-modal model 900 by using a plurality of modalities received from edge devices, and may obtain a personalized multi-modal model according to the fine-tuning.

According to the personalized multi-modal model, situation inference based on a user-customized basis and actions for situation inference can be effectively performed.

The present disclosure described above can be implemented as computer-readable code on a medium having a program recorded thereon. The computer-readable medium includes all types of recording devices that store data readable by a computer system. Examples of the computer-readable medium include HDD (Hard Disk Drive), SSD (Solid State Disk), SDD (Silicon Disk Drive), ROM, RAM, CD-ROM, magnetic tape, floppy disk, and optical data storage device.

Furthermore, the computer may include the processor 180 of the artificial intelligence device.

## Claims

1. An artificial intelligence server, comprising:
a memory configured to store a multi-modal model that infers a situation by using a plurality of modalities having different types;
a communication circuit configured to communicate with a plurality of edge devices or a cloud server; and
a processor configured to receive parameter information for a fine-tuned layer of the multi-modal model from the cloud server, receive a plurality of encrypted modalities from the plurality of edge devices, and update the parameter information of the fine-tuned layer of the multi-modal model by using the received plurality of encrypted modalities.

2. The artificial intelligence server of claim 1, wherein the processor is configured to further receive a plurality of encrypted modalities, and obtain a first situation inference result from the additionally received plurality of encrypted modalities by using the updated multi-modal model.

3. The artificial intelligence server of claim 2, wherein the processor is configured to transmit the plurality of encrypted modalities and the first situation inference result to the cloud server through the communication circuit.

4. The artificial intelligence server of claim 3, wherein the processor is configured to receive a notification from the cloud server when a second situation inference result obtained by the cloud server is different from the first situation inference result.

5. The artificial intelligence server of claim 2, wherein the processor is configured to determine whether a response to the first situation inference result is possible, transmit a response result to the plurality of edge devices through the communication circuit based on determining that the response is possible, and transmit the situation inference result to the cloud server based on determining that the response is impossible.

6. The artificial intelligence server of claim 5, wherein the processor is configured to receive a response result in response to transmitting the situation inference result to the cloud server from the cloud server.

7. The artificial intelligence server of claim 1, wherein each of the plurality of modalities is one of image data, sound data, sensing data, text data, or log data.

8. The artificial intelligence server of claim 1, wherein the multi-modal model is an artificial neural network-based model learned through contrastive learning (Contrastive Learning).

9. A method of operating an artificial intelligence server, comprising:
receiving parameter information for a fine-tuned layer of a multi-modal model that infers a situation by using a plurality of modalities having different types, from a cloud server;
receiving a plurality of encrypted modalities from the plurality of edge devices; and
updating the parameter information of the fine-tuned layer of the multi-modal model by using the received plurality of encrypted modalities.

10. The method of operating an artificial intelligence server of claim 9, further comprising:
further receiving a plurality of encrypted modalities, and obtaining a first situation inference result from the additionally received plurality of encrypted modalities by using the updated multi-modal model.

11. The method of operating an artificial intelligence server of claim 10, further comprising:
transmitting the plurality of encrypted modalities and the first situation inference result to the cloud server through the communication circuit.

12. The method of operating an artificial intelligence server of claim 11, further comprising:
receiving a notification from the cloud server when a second situation inference result obtained by the cloud server is different from the first situation inference result.

13. The method of operating an artificial intelligence server of claim 10, further comprising:
determining whether a response to the first situation inference result is possible;
transmitting a response result to the plurality of edge devices through the communication circuit based on determining that the response is possible; and
transmitting the situation inference result to the cloud server based on determining that the response is impossible.

14. The method of operating an artificial intelligence server of claim 13, further comprising:
receiving a response result in response to transmitting the situation inference result to the cloud server from the cloud server.

15. The method of operating an artificial intelligence server of claim 9, wherein each of the plurality of modalities
is one of image data, sound data, sensing data, text data, or log data.
